# EUROPEAN PATENT APPLICATION

(11) **EP 4 088 571 A1**
(43) Date of publication of application: **16.11.2022**
(21) Application number: 22172921.3
(22) Date of filing: 12.05.2022
(51) Int. Cl.: A01K 61/95, A01K 61/17

(54) **FISH EGG SORTER FOR SELECTING AND COUNTING EGGS**

(30) Priority: 12.05.2021 IT 202100012215
(71) Applicant: T.T.C. S.r.l.s., 25126 Brescia (IT)
(72) Inventor: CANTONATI, Alessandro, I-25126 BRESCIA (IT)
(74) Representative: Chimini, Francesco

(57) **Abstract**

The invention consists of a fish egg sorter (1) suitable for selecting and counting fish eggs comprising a tank (2) defining a housing (200), wherein said housing (200) is suitable for housing fish eggs mixed with water, wherein said tank (2) comprises one or more discharge openings; an egg-holder roller (3) suitable for being rotated around a roller axis (X-X), a plurality of egg seats (3a) being obtained in the lateral surface of the egg-holder roller (3), each egg seat (3a) being sized to receive an egg, wherein the egg-holder roller (3) is positioned downstream of said one or more discharge openings so as to receive eggs mixed with water exiting from said one or more discharge openings, wherein the egg-holder roller (3) is operatively connected to suction means suitable for sucking up the water exiting from the discharge openings. Furthermore, the egg sorter (1) comprises an egg selection area (47) positioned downstream of the egg-holder roller (3).

Such an egg selection area (47) comprises an egg inspection plane suitable for receiving from the egg-holder roller eggs separated from the water and spaced apart from each other; egg recognition means comprising RGB sensors suitable for recognizing the color of the eggs present on the egg inspection plane; and egg separation and numbering means suitable for separating and numbering eggs according to the color thereof.

## Description

The present invention relates to a fish egg sorter which allow to select and count eggs.

The egg selection and counting method is an object of the present invention as well.

The present invention relates to the aquaculture field, in particular it refers to full-cycle fish farms.

Specifically, fish egg sorters have a dual function: they have the purpose of selecting eggs to differentiate properly embryonated eggs, suitable eggs, from eggs that must be discarded because they are not properly embryonated; they have the purpose of counting eggs after the differentiation thereof, so as to quantify the suitable eggs and the discarded eggs.

A multiplicity of machines used to select and count fish eggs are known in the background art.

In particular, sorters using sensors that detect egg transparency to recognize suitable eggs are known; such sorters differentiate the eggs based on the opacity thereof. However, such sensors are not always accurate, and the sorting is thus not reliable.

Moreover, the sorters present in the background art are operationally slow and can result in low production.

An object of the present invention is to provide a fish egg sorter and a method of selecting and counting eggs which is capable of overcoming the drawbacks complained of above with reference to the known egg selection systems.

Another object of the present invention is to accelerate production and select a much larger number of eggs at the same time.

Such objects are achieved with a fish egg sorter according to claim 1. Furthermore, such objects are achieved by the egg selection and counting method according to claim 10. The claims dependent thereon show preferred variants implying further advantageous aspects.

The features and advantages of the fish egg sorter according to the present invention will however become apparent from the following description of preferred embodiments thereof, given by way of indication and not of limitation, with reference to the accompanying drawings, in which:

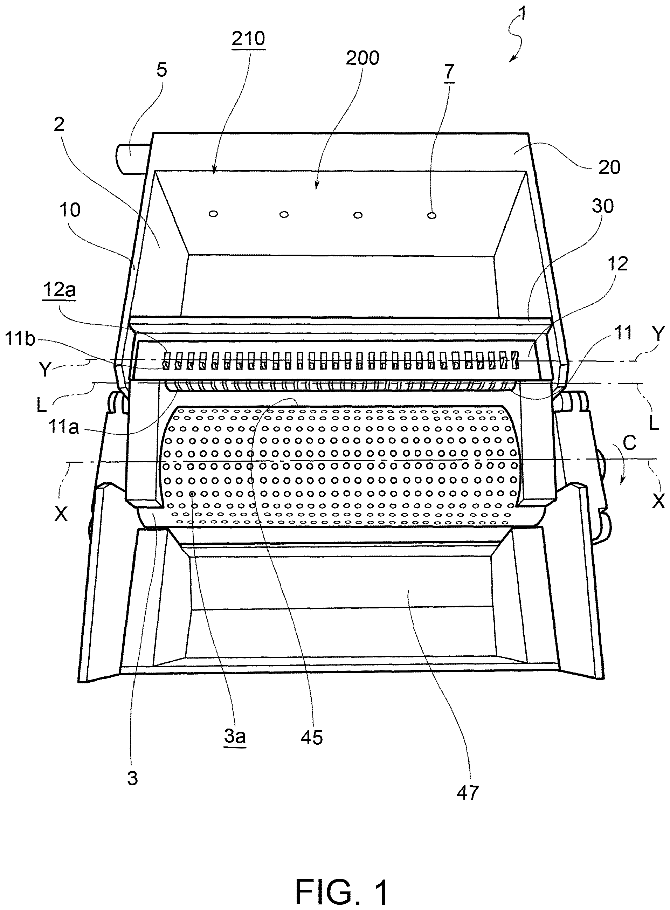

- figure 1 is a perspective view of a fish egg sorter according to the invention, in accordance with a preferred embodiment;

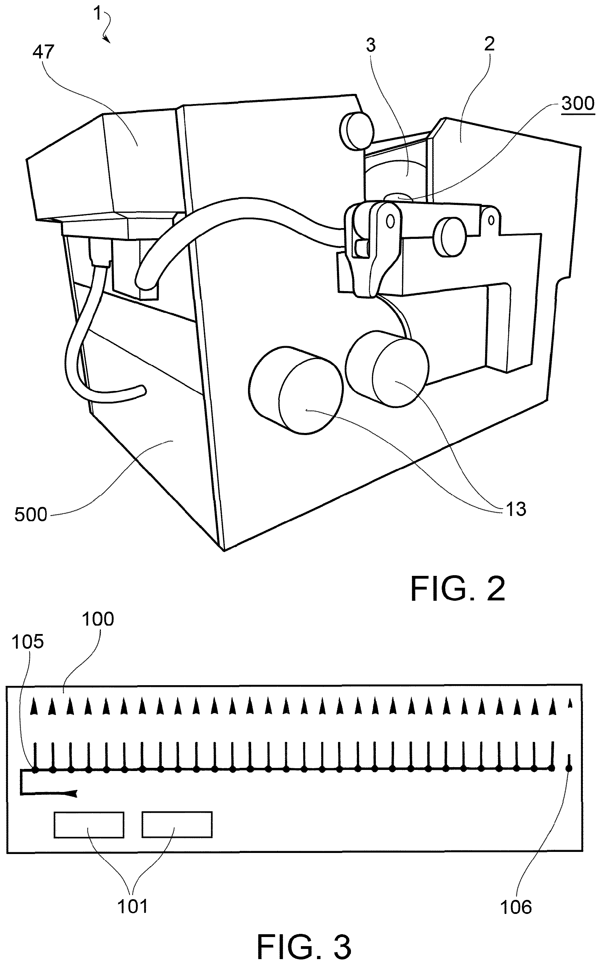

- figure 2 is a perspective view of the fish egg sorter according to the invention, in accordance with a preferred embodiment;
- figure 3 is the front view of a component of the fish egg sorter according to the invention, in accordance with a preferred embodiment.

In said drawings, with 1 an egg sorter suitable for selecting and counting fish eggs, according to the present invention, has been indicated as a whole. The egg selection and counting method fully described below is in turn an object of the present invention.

According to the present invention, the egg sorter 1 comprises a tank 2, preferably box-shaped, which defines a housing 200 suitable for housing fish eggs mixed with water.

In a preferred embodiment, the tank 2 comprises an inlet 5 suitable for inserting water into the tank 2. Preferably, such an inlet 5 is comprised in the outer surface of a first wall 10 of the tank 2. In accordance with an embodiment, a tubular connection is sealingly connected to the inlet 5.

In an embodiment, the tank 2 comprises one or more outlet holes 7, preferably obtained on the inner surface of a second wall 20 of the tank 2, suitable for flowing water into the housing 200.

According to an embodiment, the inlet 5 is fluidly connected to such one or more outlet holes 7.

According to a preferred embodiment, the tank 2 comprises a loading opening 210 suitable to allow the insertion of the eggs into such a housing 200.

According to a preferred embodiment, the sorter 1 comprises a tank lid in which said tank lid closes the loading opening 210. Furthermore, the tank lid comprises at least one lid opening suitable to allow the insertion of the eggs in such a housing 200.

According to a depicted embodiment, the tank 2 is of the open-air type.

In an embodiment, the sorter 1 comprises automatic loading systems suitable for inserting the eggs into said housing 200.

According to the invention, such a tank 2 comprises one or more discharge openings.

According to an embodiment, such one or more discharge openings are obtained in a third wall 30. Preferably, such one or more discharge openings pass through the thickness of the wall 30.

According to a preferred embodiment, from each of these one or more discharge openings exits one egg at a time mixed with water. In other words, from each of these one or more discharge openings a flow of water exits together with one egg at a time.

In accordance with the invention, the sorter 1 comprises an egg-holder roller 3 suitable for being rotated around a roller axis X-X. In the lateral surface of the egg-holder roller 3, a plurality of egg seats 3a are obtained, each egg seat 3a is sized to receive one egg.

According to the invention, the egg-holder roller 3 is positioned downstream of said one or more discharge openings so as to receive eggs mixed with water exiting from said one or more discharge openings. In other words, the eggs mixed with water, exiting from said one or more discharge openings, fall by gravity and are housed in the plurality of egg seats 3a.

According to the invention, the egg-holder roller 3 is operatively connected to suction means suitable for sucking the water exiting from the discharge openings. In other words, the eggs house and remain in the egg seats 3a as the water is attracted by vacuum with such suction means.

In accordance with an embodiment, the egg seats 3a are arranged in axial rows parallel to the roller axis X-X and circumferential rows.

According to an embodiment, each egg seat 3a is countersunk and has a size such that only one egg can be housed at a time.

In a preferred embodiment, the sorter 1 comprises a fixed cylinder 11 extending along a cylinder axis L-L parallel to the roller axis X-X. Such a cylinder 11 is positioned downstream of said one or more discharge openings of the tank 2 and upstream of said egg-holder roller 3, so as to receive eggs mixed with water exiting from said eggs or multiple discharge openings.

In accordance with an embodiment, the cylinder 11 comprises one or more grooves 11a suitable for conveying eggs mixed with water towards the egg-holder roller 3.

In other words, the flow of water and eggs, exiting from said one or more discharge openings, is conveyed into said one or more grooves 11a. In further words, such one or more grooves 11a are selective conveyors. Thereafter, the eggs fall by gravity from such one or more grooves 11a and are housed in said egg seats 3a.

In a further embodiment, said cylinder 11 comprises one or more levers 11b suitable for contact-closing the discharge openings.

In a preferred embodiment, such one or more levers 11b are arranged so that each of such one or more levers 11b is aligned with one of such one or more discharge openings. The translation of a lever 11b involves closing the respective discharge openings with which said lever 11b is aligned.

According to a preferred embodiment, the number of discharge openings is equal to the number of levers 11b.

According to an embodiment, the sorter 1 comprises an element 12 extending along a longitudinal axis Y-Y parallel to the cylinder axis L-L. Such an element 12 comprises one or more through slots 12a arranged along the longitudinal axis Y-Y. Such one or more slots 12a are suitable for housing each of such one or more levers 11b. In other words, a lever 11b crosses a respective slot 12a and protrudes with respect to the element 12 from the side opposite the inlet.

In accordance with an embodiment, each lever 11b can translate, for example by means of a manual action, along a direction substantially transverse with respect to the longitudinal axis Y-Y.

In accordance with the invention, the sorter 1 comprises an analysis area 47 comprising an egg inspection plane suitable for receiving from the egg-holder roller the eggs separated from water and spaced apart from each other. Furthermore, the analysis area 47 comprises egg recognition means and egg separation and numbering means. The egg recognition means comprise RGB sensors suitable for recognizing the color of the eggs present on the egg inspection plane. The egg separation and numbering means are suitable for separating and numbering the eggs based on the color thereof.

In accordance with an embodiment, the egg-holder roller 3 comprises a loading area 45, in such loading area 45 the eggs are housed in the plurality of egg seats 3a.

The egg-holder roller 3, rotating around the roller axis X-X, integrally transports the eggs housed in the egg seats 3a from the loading area 45 to the analysis area 47.

In accordance with an embodiment, the analysis area 47 is substantially diametrically opposite the loading area 45.

It is possible to define a clockwise rotation direction C in which such an egg-holder roller 3 rotates from the loading area 45 to the analysis area 47.

In an embodiment, the egg-holder roller 3 defines an egg-holder roller housing 300 therein. Said suction means are present in such a housing 300.

In accordance with an embodiment, the egg-holder roller 3 has a number of egg seats 3a per axial row equal to the number of discharge openings of the tank 2. In an embodiment, the circumferential rows of such egg seats 3a are aligned with respect to such discharge openings.

In a preferred embodiment, the number of egg seats 3a per axial row is equal to the number of grooves 11a and levers 11b; in an embodiment, the circumferential rows of such egg seats 3a are aligned with respect to such grooves 11a.

In a preferred embodiment, the sorter 1 comprises an electric actuator and said egg-holder roller 3 rotates by means of said electric actuator.

In accordance with an embodiment, the sorter comprises a sealed compartment 500. In other words, the walls of the compartment sealingly close such a compartment 500. The electrical actuator is housed in said sealed compartment 500.

In a preferred embodiment, the sorter 1 comprises ducts 13, for example tubular, suitable for transporting the eggs according to the color thereof from the analysis area 47 to collection containers.

In accordance with a preferred embodiment, the sorter 1 comprises an information display panel 100.

In a preferred embodiment, the sorter 1 further comprises locking means suitable to mutually engage such a sorter 1 and such an information display panel 100 to ensure the mutual integral locking. The information display panel may, for example, comprise a battery so as to have energy autonomy.

According to an embodiment, said information display panel 100 comprises one or more warning lights 105. Preferably, the number of warning lights 105 corresponds to the number of egg seats 3a arranged along an axial row. In other words, for each axial row, a warning light 105 corresponds to each egg seat 3a of an axial row.

Such one or more lights 105 light up according to the color of the egg analyzed, housed in the corresponding egg seat 3a.

In a preferred embodiment, said one or more lights 105 comprise a light 106 which lights up when the sorter 1 is stopped.

In an embodiment, the information display panel 100 comprises at least one display 101 suitable for reporting the data corresponding to the number of eggs according to the color thereof.

In one embodiment, the information display panel 100 comprises two displays 101.

As mentioned, the egg selection and counting method is the object of the present invention as well. In particular, such a selection and counting method comprises the steps of:
a) providing an egg sorter 1 according to the invention;
b) loading the eggs and the water into the housing 200;
c) operating the suction means so that the eggs released from said one or more openings are each housed in an egg seat 3a;
d) operating the egg-holder roller 3 so that, by rotating, it transports the eggs housed in the egg seats 3a into the selection area 47 and so that the eggs are positioned spaced apart on the inspection plane;
e) operating the egg recognition means so that the RGB sensors recognize the color of the eggs present on the egg inspection plane;
f) operating the egg separation and numbering means so that the eggs are separated and numbered according to the color thereof.

According to a preferred embodiment, in step e, the information display panel 100 is also operated, so that the warning lights 105 light up according to the color of the analyzed egg housed in the corresponding egg seat 3a and so that the at least one display 101 shows the data corresponding to the number of analyzed eggs and numbered according to the color thereof.

Innovatively, the fish egg sorter of the present invention fully fulfils its intended purpose. Similarly, the fish egg selection and counting method of the present invention also fully fulfils the intended purpose.

Advantageously, by virtue of the present invention it is possible to obtain correct and precise data about the number of eggs to be stored and subsequently to be sold, or to be hatched at a plant.

Advantageously, it is also possible to load, select and count eggs using a single machine instead of using a machine for each individual function.

Advantageously, through the information display panel, it is possible to view the count of suitable and unsuitable eggs, stop the machine, reset and store the data.

Advantageously, it is possible to obtain the number of suitable eggs and to discard, store and reset the data, number a single processed egg drum which will ensure the traceability of the fish throughout the life thereof.

Advantageously, it is possible to track breeding queens and fathers of each fish, thus having the possibility to manage the genealogy of the strain.

A person skilled in the art may make changes and adaptations to the embodiments of the fish egg sorter according to the invention or may replace elements with others which are functionally equivalent in order to meet contingent needs, without departing from the scope of the following claims. All the features described above as belonging to a possible embodiment can be implemented irrespective of the other embodiments described.

## Claims

1. A fish egg sorter (1) suitable for selecting and counting fish eggs, comprising:
i) a tank (2) defining a housing (200), wherein said housing (200) is suitable for housing fish eggs mixed with water, wherein said tank (2) comprises one or more discharge openings;
ii) an egg-holder roller (3) suitable for being rotated around a roller axis (X-X), wherein a plurality of egg seats (3a) is obtained in the lateral surface of the egg-holder roller (3), each egg seat (3a) being sized to receive an egg, wherein the egg-holder roller (3) is positioned downstream of said one or more discharge openings so as to receive eggs mixed with water exiting from said one or more discharge openings, wherein the egg-holder roller (3) is operatively connected to suction means suitable for sucking up the water exiting from said one or more discharge openings;
iii) an egg selection area (47) positioned downstream of the egg-holder roller (3) and comprising:
- an egg inspection plane suitable for receiving from the egg-holder roller eggs separated from the water and spaced apart from each other;
- egg recognition means comprising RGB sensors suitable for recognizing the color of the eggs present on the egg inspection plane; and
- egg separation and numbering means, suitable for separating and numbering the eggs according to their color.

2. Egg sorter (1) according to claim 1, comprising automatic loading systems suitable for inserting the eggs into said housing (200).

3. Egg sorter (1) according to any one of the preceding claims, wherein the tank (2) comprises an inlet (5) suitable for inserting water into the tank (2), wherein the tank (2) comprises one or more outlet holes (7) suitable for making the water flow into the housing (200), wherein the inlet (5) is fluidically connected to said one or more outlet holes (7).

4. Egg sorter (1) according to any one of the preceding claims, comprising a fixed cylinder (11) extending along a cylinder axis (L-L) parallel to the roller axis (X-X), wherein said cylinder (11) is positioned downstream of said one or more discharge openings and upstream of said egg-holder roller (3) so as to receive eggs mixed with water exiting from said one or more discharge openings, wherein said cylinder (11) comprises one or more grooves (11a) suitable for conveying eggs mixed with water towards the egg-holder roller (3).

5. Egg sorter (1) according to claim 4, wherein said cylinder (11) comprises one or more levers (11b) suitable for contact-closing said one or more discharge openings.

6. Egg sorter (1) according to any one of the preceding claims, comprising ducts (13) suitable for transporting the eggs according to the color thereof from the analysis area (47) to collection containers.

7. Egg sorter (1) according to any one of the preceding claims, comprising an information display panel (100), wherein said information display panel (100) comprises one or more warning lights (105) and at least one display (101) suitable for reporting the data corresponding to the number of eggs analyzed and numbered according to the color thereof.

8. Egg sorter (1) according to claim 7, wherein the egg seats (3a) are arranged in axial rows, parallel to the roller axis (X-X), wherein the number of warning lights (105) corresponds to the number of egg seats (3a) arranged along an axial row so that each egg seat (3a) of an axial row corresponds to a warning light (105), so that each warning light (105) lights up according to the color of the analyzed egg housed in the corresponding egg seat (3a).

9. Egg sorter (1) according to any one of the preceding claims, comprising an electric actuator and a sealed compartment (500), wherein the electric actuator is housed in said sealed compartment (500), wherein the egg-holder roller (3) rotates by means of said electric actuator.

10. A method for selecting and counting fish eggs comprising the steps of:
a) providing an egg sorter (1) according to any one of claims 1 to 9;
b) loading the eggs and water into the housing (200);
c) operating the suction means so that the eggs released from said one or more openings are each housed in an egg seat (3a);
d) operating the egg-holder roller (3) so that, by rotating, it transports the eggs housed in the egg seats (3a) to the analysis area (47) and so that the eggs are positioned spaced apart on the inspection plane;
e) operating the egg recognition means so that the RGB sensors recognize the color of the eggs present on the egg inspection plane;
f) operating the egg separation and numbering means so that the eggs are separated and numbered according to the color thereof.

11. Method for selecting and counting fish eggs according to claims 8 and 10, wherein in step e, the information display panel (100) is operated, so that the warning lights (105) light up according to the color of the analyzed egg housed in the corresponding egg seat (3a) and so that the at least one display (101) shows the data corresponding to the number of analyzed eggs and numbered according to their color.
